# EUROPÄISCHE PATENTSCHRIFT

(11) **EP 4 016 154 B1**
(45) Veröffentlichungstag und Bekanntmachung des Hinweises auf die Patenterteilung: **10.05.2023**
(21) Anmeldenummer: 21213273.2
(22) Anmeldetag: 08.12.2021
(51) Int. Cl.: G02B 6/42

(54) **LICHTWELLENLEITERSTECKVERBINDERANORDNUNG**
FIBRE OPTIC CONNECTOR ASSEMBLY
AGENCEMENT DE CONNECTEUR ENFICHABLE DE FIBRE OPTIQUE

(30) Priorität: 16.12.2020 DE 102020133767
(43) Veröffentlichungstag der Anmeldung: 22.06.2022
(73) Patentinhaber: MD Elektronik GmbH, 84478 Waldkraiburg (DE)
(72) Erfinder: Pritz, Helmut, 84539 Ampfing (DE); Halbig, Thomas, 92345 Dietfurt (DE); Axt, Heinrich, 84505 Burgkirchen an der Alz (DE)

(56) Entgegenhaltungen:
- US-A1- 2005 025 436
- US-A1- 2013 156 385
- US-A1- 2015 341 066

## Beschreibung

### Technisches Gebiet

Die Erfindung betrifft eine Steckverbinderanordnung mit einem Steckverbinder, einem Lichtwellenleiter und einer Leiterplatine. Der Lichtwellenleiter ist mithilfe des Steckverbinders mit der Leiterplatine verbindbar, wobei der Steckverbinder lösbar mit der Leiterplatine verbunden ist.

### Stand der Technik

Durch die zunehmende Digitalisierung und Miniaturisierung von Produkten und Prozessen und den damit anfallenden immer größer werdenden Datenmengen wächst auch zunehmend der Bedarf an platzsparenden und kosteneffektiven Datenverbindungen, die hohe Datenübertragungsraten ermöglichen. Da Lichtwellenleiter besonders geeignet sind, um hohe Datenübertragungsraten zu erreichen, wird die Anwendung von Lichtwellenleitern als Übertragungsmittel von Daten zunehmend interessanter. Die Anwendung von Lichtwellenleitern ist jedoch auch mit Nachteilen verbunden. So muss zur Datenübertragung mithilfe von Lichtwellenleitern ein elektrisches Signal zuerst in ein Lichtsignal umgewandelt werden, welches anschließend in einen Lichtwellenleiter eingespeist werden kann. Nachdem das Lichtsignal den Lichtwellenleiter durchlaufen hat, muss anschließend das Lichtsignal aus dem Lichtleiter ausgekoppelt und zurück in ein elektrisches Signal umgewandelt werden. Folglich sind Verbindersysteme, die Lichtwellenleiter mit den entsprechenden Verbindungspartnern verbinden vergleichsweise komplex und aufwändig gestaltet, was sich nicht selten nachteilig auf den erforderlichen Bauraum auswirkt. Weiterhin sind zur Datenübertragung mittels Lichtwellenleiter meist deutlich mehr Bauteile erforderlich als bei vergleichbaren Hochfrequenzleitungen, die Daten auf elektrischem Wege übertragen. Im Vergleich zu besagten Hochfrequenzleitungen weisen Übertragungssysteme mittels Lichtwellenleiter daher nicht nur höhere Kosten auf, sondern ist meist auch der Montageaufwand aufgrund der zusätzlich notwendigen Bauteile größer.

Es wird an dieser Stelle auf die Druckschriften US 2015/341066 A1, US 2005/025436 A1 und US 2013/156385 A1, die den Stand der Technik repräsentieren, hingewiesen.

### Beschreibung der Erfindung

Es ist daher eine Aufgabe der vorliegenden Erfindung zumindest einen im Stand der Technik genannten Nachteil zu überwinden und eine Steckverbinderanordnung für Lichtwellenleiter bereitzustellen, die einen geringen Bauraumbedarf aufweist und zusätzlich deren Montage nur geringen Aufwand bedarf.

Die erfindungsgemäße Aufgabe wird durch eine Steckverbinderanordnung mit den Merkmalen des unabhängigen Anspruchs gelöst. Weitere vorteilhafte Ausgestaltungsformen der Erfindung lassen sich den Unteransprüchen, der Beschreibung sowie den Zeichnungen entnehmen.

Die erfindungsgemäße Steckverbinderanordnung umfasst einen Steckverbinder, einen Lichtwellenleiter und eine Leiterplatine. die Leiterplatine weist zumindest eine erste Durchgangsöffnung und eine Sende/Empfangseinheit zum Senden und/oder Empfangen von Lichtsignalen auf. Die Durchgangsöffnung verläuft vorzugsweise senkrecht durch die Leiterplatine. Die Sende/Empfangseinheit ist vorzugsweise elektrisch leitend mit der Leiterplatine verbunden, so dass elektrische Signale zwischen Leiterplatine und Sende/Empfangseinheit übermittelbar sind. Die Sende/Empfangseinheit ist vorzugsweise ausgebildet, um elektrische Signale in Lichtsignale und/oder Lichtsignale in elektrische Signale umzuwandeln. Der Steckverbinder ist formschlüssig und lösbar mit der Leiterplatine verbunden. Die Verbindung zwischen Steckverbinder und Leiterplatte erfolgt erfindungsgemäß mithilfe zumindest eines Befestigungselements das am Steckverbinder angeordnet und durch die erste Durchgangsöffnung geführt ist. Das Befestigungselement kann beispielsweise als Rasthaken ausgeführt sein. Das Befestigungselement ist bevorzugt einstückig und materialeinheitlich mit dem Steckverbinder ausgebildet. Das Befestigungselement ist mit der Leiterplatine verbunden und besonders bevorzugt verrastet.

Der Steckverbinder weist einen ersten Aufnahmeraum auf, der zumindest teilweise an die Sende/Empfangseinheit angrenzt. Bevorzugt ist der Aufnahmeraum zur Sende/Empfangseinheit geöffnet. In dem ersten Aufnahmeraum ist eine Linseneinheit angeordnet. Die Linseneinheit kann aus einem lichtleitenden Kunststoff wie zum Beispiel Polymethylmethacrylat oder Polycarbonat bestehen. Die Linseneinheit verbindet die Sende/Empfangseinheit lichtleitend mit dem Lichtwellenleiter. Der Lichtwellenleiter ist vorzugsweise mit dem Steckverbinder lösbar, mechanisch verbunden. Weiterhin ist ein Verriegelungselement bewegbar an dem Steckverbinder angeordnet. Das Verriegelungselement ist zumindest teilweise und innerhalb des ersten Aufnahmeraums angeordnet und befestigt die Linseneinheit im ersten Aufnahmeraum. Die Befestigung der Linseneinheit mithilfe des Verriegelungselements kann beispielsweise erfolgen, indem die Linseneinheit zwischen dem Verriegelungselement und einer Innenwandung des ersten Aufnahmeraums eingeklemmt wird. Vorzugsweise wird die Linseneinheit durch das Verriegelungselement ortsfest im ersten Aufnahmeraum befestigt, so dass eine Bewegung der Linseneinheit innerhalb des ersten Aufnahmeraums durch das Verriegelungselement behindert wird. Bevorzugt ist das Verriegelungselement teilweise außerhalb und teilweise innerhalb des ersten Aufnahmeraums angeordnet, wobei es in diesem Zusammenhang besonders bevorzugt ist, dass der erste Aufnahmeraum eine Zugangsöffnung aufweist, durch die das Verriegelungselement in den ersten Aufnahmeraum hineinragt. Das Verriegelungselement ist in eine Endrastposition bewegbar, in der das Verriegelungselement zumindest teilweise in die erste Durchgangsöffnung hineinragt und ein Lösen des Befestigungselements von der Leiterplatine blockiert. Sofern das Verriegelungselement teilweise außerhalb und teilweise innerhalb des ersten Aufnahmeraums angeordnet ist, ist es bevorzugt, dass das Verriegelungselement mit einem Bereich, der außerhalb des ersten Aufnahmeraums angeordnet ist in die erste Durchgangsöffnung hineinragt. Sofern die Leiterplatine mehrere erste Durchgangsöffnungen aufweist, können mehrere Befestigungselemente am Steckverbinder vorgesehen sein, so dass in mehreren ersten Durchgangsöffnungen Befestigungselemente angeordnet sein können, die mit der Leiterplatine verbunden sind. In diesem Fall kann das Verriegelungselement in mehrere Durchgangsöffnungen hineinragen. Vorzugsweise befestigt das Verriegelungselement das Linsenelement sowohl innerhalb als auch außerhalb der Endrastposition im ersten Aufnahmeraum.

Die erfindungsgemäße Steckverbinderanordnung ist durch die Verbindung des Steckverbinders mit der Leiterplatine mithilfe des Befestigungselements auf einfache Weise lösbar montierbar. Auf diese Weise ist nicht nur eine Wiederverwendbarkeit der Steckverbinderanordnung gewährleistet. Darüber hinaus lässt sich zumindest in Teilen ein Baukastensystem realisieren, da bspw. der Steckverbinder auf verschiedenen Leiterplatinen bzw. eine Leiterplatine mit verschiedensten Steckverbindern ausgestattet werden kann, solange die Anordnung der ersten Durchgangsöffnungen zu der Anordnung der Befestigungselemente des Steckverbinders passt. Die leichte Demontage ermöglicht weiterhin ein einfacheres Trennen der Bauteile, wenn die Steckverbinderanordnung am Ende ihrer Lebensdauer der Entsorgung zugeführt werden soll. Da das Verriegelungselement durch das Befestigen der Linseneinheit und das Blockieren des Befestigungselements eine Doppelfunktion bereitgestellt wird, kann der Komplexitätsgrad der Steckverbinderanordnung geringgehalten werden.

Die Linseneinheit kann eine erste Kopplungsfläche, die mit einer Stirnseite des Lichtwellenleiters und eine zweite Kopplungsfläche, die mit einer Kommunikationsseite der Sende/Empfangseinheit lichtleitend gekoppelt ist, aufweisen. Bevorzugt ist die erste Kopplungsfläche senkrecht zur zweiten Kopplungsfläche angeordnet. Auf diese Weise lässt sich der Lichtwellenleiter parallel zur Leiterplatine anordnen. Dies ermöglicht es, den auf der Platine zur Verfügung stehenden Bauraum effektiver zu nutzen. Die erste und/oder zweite Kopplungsfläche können eine Oberflächenbeschaffenheit aufweisen, die das Ein- und/oder Auskoppeln von Licht in die Linseneinheit begünstigt. Dies kann beispielsweise mit einer Beschichtung realisiert sein. Ebenso kann die Stirnseite und/oder die Kommunikationsseite eine entsprechende Oberflächenbeschaffenheit, beispielsweise in Form einer Beschichtung aufweisen. Unter Kommunikationsseite kann die Seite der Sende/Empfangseinheit verstanden werden, an der die Sende/Empfangseinheit Lichtsignale detektieren und/oder aussenden kann. Die Kommunikationsseite verläuft vorzugsweise parallel zur Leiterplatine.

Die erste Kopplungsfläche kann zumindest abschnittsweise eine zur Stirnseite komplementäre Form aufweisen. Alternativ oder zusätzlich kann die zweite Kopplungsfläche zumindest abschnittsweise eine zur Kommunikationsseite komplementäre Form aufweisen. Beispielsweise können die Stirnseite und/oder die Kommunikationsseite Erhebungen und/oder Vertiefungen aufweisen. Durch eine komplementäre Form der ersten und/oder zweiten Kopplungsfläche kann nicht nur die Lichtübertragung zwischen der Linseneinheit mit dem Lichtwellenleiter und/oder der Sende/Empfangseinheit verbessert werden. Denn darüber hinaus kann eine komplementäre Form die Positionierung zwischen Linseneinheit und Stirnseite und/oder Kommunikationsseite vereinfachen. Beispielsweise kann die Stirnseite eine Vertiefung aufweisen, in die eine komplementäre Erhebung der Linseneinheit einbringbar ist.

Die Linseneinheit kann ein erstes und ein zweites Linsenelement mit jeweils einer ersten und zweiten Kopplungsfläche aufweisen, so dass zwei Lichtwellenleiter mit der Kommunikationsseite lichtleitend koppelbar sind. Vorzugsweise werden zwei Lichtwellenleiter mit einer Sende/Empfangseinheit gekoppelt, so dass bevorzugt ein Lichtwellenleiter zum Senden und ein Lichtwellenleiter zum Empfangen von Lichtsignalen von der Sende/Empfangseinheit genutzt werden kann. Das erste und das zweite Linsenelement sind bevorzugt über einen Verbindungsabschnitt strukturell miteinander verbunden. Vorzugsweise sind die ersten Kopplungsflächen der beiden Linsenelemente und die zweiten Kopplungsflächen der beiden Linsenelemente jeweils in einer Ebene angeordnet. Die Linsenelemente und der Verbindungsabschnitt sind bevorzugt materialeinheitlich und/oder einstückig ausgebildet.

Das Verriegelungselement kann einen Befestigungssteg aufweisen, der im ersten Aufnahmeraum und an den Verbindungsabschnitt anliegend angeordnet ist. Der Befestigungssteg ist vorzugsweise zumindest in der Endrastposition zwischen dem ersten und zweiten Linsenelement angeordnet. Bevorzugt weist der Befestigungssteg eine Breite auf, die kleiner ist als der Abstand, den das erste und zweite Linsenelement durch den Verbindungsabschnitt zueinander aufweisen. Unter der Breite des Befestigungssteges kann an dieser Stelle eine Dimension des Befestigungssteges verstanden werden, die parallel zur Leiterplatine und senkrecht zu einer Steckrichtung verläuft. Weiterhin ist es bevorzugt, dass der Befestigungssteg durch die Zugangsöffnung in den ersten Aufnahmeraum eingebracht ist.

Um eine einfache Ausrichtung und Positionierung des Steckverbinders auf der Leiterplatine zu ermöglichen, kann die Leiterplatine zumindest eine zweite Durchgangsöffnung aufweisen, in der ein Positionierdom des Steckverbinders angeordnet ist. Der Positionierdom kann auf einer der Leiterplatine zugewandten Seite des Steckverbinders angeordnet sein. Weiterhin ist der Positionierdom bevorzugt einstückig mit dem Steckverbinder ausgebildet. In einer weiteren Ausgestaltung der Erfindung kann der Positionierdom zur Fixierung des Steckverbinders an der Leiterplatine dienen. Dies kann erfolgen, indem der Positionierdom beispielsweise umgeformt wird. Alternativ kann auch ein zusätzliches Verbindungsmittel, wie eine Schraubkappe am Positionierdom befestigt werden.

Die Leiterplatine kann zwei erste Durchgangsöffnungen und eine zweite Durchgangsöffnung aufweisen. Es ist besonders bevorzugt, dass die zweite Durchgangsöffnung zu beiden ersten Durchgangsöffnungen einen gleichen Abstand aufweist und die zwei ersten Durchgangsöffnungen mit der zweiten Durchgangsöffnung die Eckpunkte eines gleichschenkligen Dreiecks ausbilden. Auf diese Weise ist nicht nur sichergestellt, dass der Steckverbinder korrekt auf der Leiterplatine positioniert wird.

Die Sende/Empfangseinheit kann innerhalb des gleichschenkligen Dreiecks, das durch die ersten Durchgangsöffnungen und die zweite Durchgangsöffnung ausgebildet wird, angeordnet sein. Die Sende/Empfangseinheit kann dabei entweder vollständig oder zumindest zum Großteil innerhalb des gleichschenkligen Dreiecks angeordnet sein. Auf diese Weise ist nicht nur eine platzsparende Anordnung auf der Leiterplatine möglich. Darüber hinaus kann der Steckverbinder einfach und sicher im Bereich der Sende/Empfangseinheit positioniert werden.

Der Steckverbinder kann in einem Randbereich der Leiterplatine angeordnet sein und kann zumindest ein weiteres Befestigungselement aufweisen, das insbesondere mit einer Außenkante der Leiterplatine verbunden, insbesondere verrastet, ist. Es ist an dieser Stelle besonders bevorzugt, dass der Steckverbinder zumindest drei Befestigungselemente aufweist, wobei zwei Befestigungselemente in zwei ersten Durchgangsöffnungen und ein Befestigungselement an der Außenkante mit der Leiterplatine verbunden ist. In diesem Fall ist es bevorzugt, dass die drei Befestigungselemente als Rasthaken ausgebildet sind und ein gleichschenkliges Dreieck ausbilden. Alternativ kann der Steckverbinder vier Befestigungselemente aufweisen. In diesem Fall ist es bevorzugt, dass zwei Befestigungselemente innerhalb von zwei ersten Durchgangsöffnungen mit der Leiterplatine und zwei Befestigungselemente mit der Außenkante der Leiterplatine verbunden sind. Die Befestigungselemente sind in diesem Fall bevorzugt als Rasthaken ausgebildet und in einem Rechteck zueinander angeordnet.

Das Verriegelungselement kann senkrecht zu der Leiterplatine in eine Vorraststellung bewegbar sein. In der Vorraststellung ist das Verriegelungselement vorzugsweise außerhalb der ersten Durchgangsöffnung angeordnet. Es ist bevorzugt, dass das Verriegelungselement auch in der Vorraststellung die Linseneinheit in dem ersten Aufnahmeraum befestigt. Weiterhin lässt sich das Verriegelungselement bevorzugt, beispielsweise durch Verschieben, zwischen Vorraststellung und Endraststellung bewegen.

Das Verriegelungselement kann zumindest eine Bohrung aufweisen, durch die ein am Steckverbinder angeordneter Führungsbolzen verläuft. Der Führungsbolzen ist daher bevorzugt senkrecht zur Leiterplatine und insbesondere parallel zu einer Bewegungsrichtung des Verriegelungselements angeordnet. Der Führungsbolzen kann eine Länge aufweisen, die zumindest einem Bewegungsweg entspricht, den das Verriegelungselement zwischen Vorraststellung und Endraststellung zurücklegt. Insbesondere wenn das Verriegelungselement zwischen der Vorraststellung und der Endraststellung bewegt wird, kann durch die Bohrung und den Führungsbolzen sichergestellt werden, dass das Verriegelungselement prozesssicher in die erste Durchgangsöffnung eingebracht und aus dieser entfernt werden kann. Es hat sich gezeigt, dass es besonders vorteilhaft ist, wenn der Steckverbinder zwei Führungsbolzen aufweist, die jeweils innerhalb einer Bohrung im Verriegelungselement angeordnet sind. In diesem Fall ist es besonders bevorzugt, dass der Teil des Verriegelungselements, der innerhalb des ersten Aufnahmeraums angeordnet ist, zwischen den Bohrungen angeordnet ist.

Der Lichtwellenleiter kann einen Gegensteckverbinder aufweisen, der lösbar mit dem Steckverbinder verbunden und zumindest teilweise innerhalb einer Steckkammer des Steckverbinders angeordnet ist. Es können auch mehrere Lichtwellenleiter einen gemeinsamen Steckverbinder aufweisen. Beispielsweise können zwei Lichtwellenleiter über einen gemeinsamen Gegensteckverbinder verbunden sein. Der Gegensteckverbinder ist bevorzugt lösbar mit dem Steckverbinder verbindbar.

Die Steckkammer kann über zumindest eine Verbindungsöffnung mit dem ersten Aufnahmeraum verbunden sein. Die Linseneinheit kann teilweise innerhalb der Verbindungsöffnung angeordnet sein. Die Linseneinheit kann innerhalb der Verbindungsöffnung an eine Kontur der Verbindungsöffnung angepasst sein, so dass die Verbindungsöffnung durch die Linseneinheit ausgefüllt wird. Die Linseneinheit kann darüber hinaus durch die Verbindungsöffnung in die Steckkammer hineinragen.

Der Steckverbinder kann neben dem ersten Aufnahmeraum, in dem die Linseneinheit angeordnet ist, einen zweiten Aufnahmeraum aufweisen, in dem die Sende/Empfangseinheit angeordnet ist. Der zweite Aufnahmeraum ist bevorzugt zum ersten Aufnahmeraum geöffnet. Zwischen dem ersten und zweiten Aufnahmeraum kann ein Auflageboden angeordnet sein, der bevorzugt parallel zur Leiterplatine angeordnet ist. Die Linseneinheit kann zumindest teilweise auf dem Auflageboden aufliegen.

Der erste Aufnahmeraum kann eine erste Trennwand und der zweite Aufnahmeraum kann eine zweite Trennwand aufweisen. Die erste und die zweite Trennwand trennen bevorzugt den ersten und zweiten Aufnahmeraum von der Steckkammer ab. Daher ist besonders bevorzugt, dass sowohl die erste Trennwand als auch die zweite Trennwand parallel zueinander, senkrecht zur Leiterplatine und senkrecht zur Steckrichtung angeordnet sind. Sofern die Steckkammer über zumindest eine Verbindungsöffnung mit dem ersten Aufnahmeraum verbunden ist, ist die Verbindungsöffnung bevorzugt in der ersten Trennwand angeordnet. Weiterhin ist bevorzugt, dass die erste Trennwand zur zweiten Trennwand in einer Steckrichtung versetzt angeordnet ist, so dass innerhalb der Steckkammer eine Stufe ausgebildet ist.

Aus einer Höhe einer an die Leiterplatine anliegenden Wand des Steckverbinders im Bereich der Steckkammer und einer Höhe der Stufe kann ein erstes Verhältnis ausgebildet sein. Ein zweites Verhältnis kann aus einer Länge der Sende/Empfangseinheit und einer Länge einer Reflexionsfläche ausgebildet sein. Die Reflexionsfläche weist bevorzugt die Funktion auf, Licht, das von dem Lichtwellenleiter und/oder der Sende/Empfangseinheit in die Linseneinheit eingekoppelt wird, in Richtung Sende/Empfangseinheit oder Lichtwellenleiter zu reflektieren. Vorzugsweise entspricht das erste Verhältnis dem Kehrwert des zweiten Verhältnisses. Weiterhin ist bevorzugt, dass das zweite Verhältnis einen Wert zwischen 1 und 3 aufweist. Unter Verhältnis kann in diesem Zusammenhang das Ergebnis einer Division verstanden werden. Unter Länge kann in diesem Zusammenhang eine Dimension verstanden, die parallel zur Steckrichtung verläuft. Unter Höhe kann in diesem Zusammenhang eine Dimension verstanden werden, die sich senkrecht zur Leiterplatine erstreckt.

Die Reflexionsfläche kann an die erste und zweite Kopplungsfläche angrenzen und Licht, das von der ersten oder zweiten Kopplungsfläche in die Linseneinheit eingekoppelt wird in Richtung zweite oder erste Kopplungsfläche reflektieren. Vorzugsweise bewirkt die Reflexionsfläche eine Totalreflexion des in die Linseneinheit eingebrachten Lichtes zwischen den beiden Kopplungsflächen. Die Totalreflexion wird vorzugsweise durch die Formgebung der Reflexionsfläche erzeugt, so dass von den Kopplungsflächen eingebrachtes Licht in einem Winkel auf die Reflexionsfläche trifft, das zur Totalreflexion an der Reflexionsfläche führt.

Aus einer Höhe der Sende/Empfangseinheit und einem Abstand den ein Mittelpunkt der ersten Kopplungsfläche zur Leiterplatine aufweist kann ein drittes Verhältnis ausgebildet sein. Unter der Höhe der Sende/Empfangseinheit kann auch der Abstand der Kommunikationsfläche zur Leiterplatine verstanden werden. Ein viertes Verhältnis kann aus dem Abstand eines Mittelpunktes der Kommunikationsfläche zu einer Wandung der Sende/Empfangseinheit, die vorzugsweise an der zweiten Trennwand anliegt, und einem Abstand, den die erste Teilfläche zur zweiten Teilfläche aufweist, ausgebildet sein. Das dritte Verhältnis ist bevorzugt gleich dem Kehrwert des vierten Verhältnisses. Vorzugsweise weist das vierte Verhältnis einen Wert zwischen 1 und 3 auf.

Der Gegensteckverbinder kann an einer Steckseite eine erste Teilfläche, die an der ersten Trennwand anliegt und eine zweite Teilfläche, die an der zweiten Trennwand anliegt, aufweisen. Es ist daher bevorzugt, dass die erste Teilfläche zur zweiten Teilfläche in Steckrichtung versetzt angeordnet ist.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen. Dabei zeigen:
- Figur 1: eine dreidimensionale Ansicht einer ersten Ausführungsform der erfindungsgemäßen Steckverbinderanordnung;
- Figur 2: eine Schnittansicht der erfindungsgemäßen Steckverbinderanordnung nach der ersten Ausführungsform;
- Figur 3: eine dreidimensionale Ansicht einer Leiterplatine der erfindungsgemäßen Steckverbinderanordnung nach der ersten Ausführungsform;
- Figur 4: eine dreidimensionale Schnittansicht eines Steckverbinders der erfindungsgemäßen Steckverbinderanordnung nach der ersten Ausführungsform; und
- Figuren 5 und 6: weitere Schnittansichten des Steckverbinders der erfindungsgemäßen Steckverbinderanordnung nach der ersten Ausführungsform.

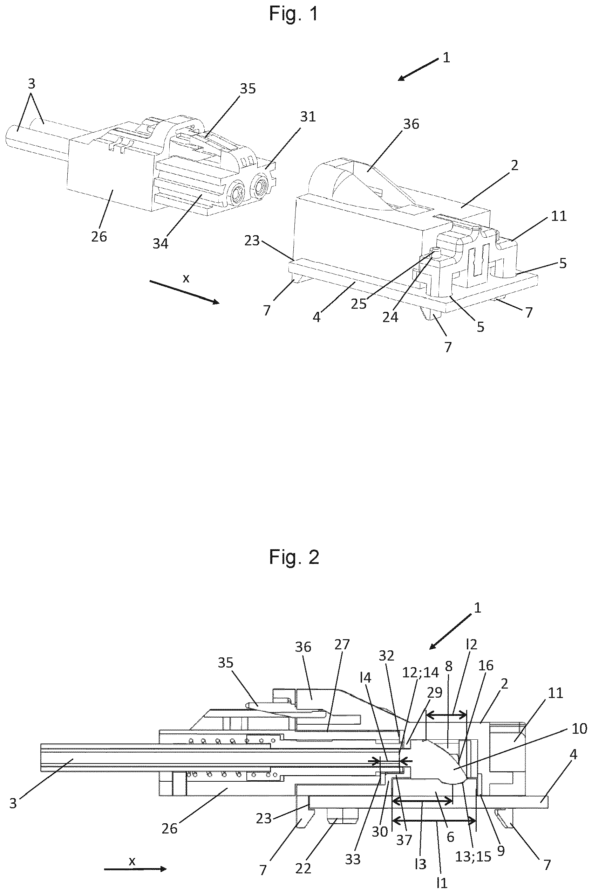

Figur 1 zeigt eine erste Ausführungsform einer erfindungsgemäßen Steckverbinderanordnung 1 in einer dreidimensionalen Ansicht. Die Steckverbinderanordnung 1 umfasst einen Steckverbinder 2, eine Leiterplatine 4 und zwei Lichtwellenleiter 3, die über einen Gegensteckverbinder 26 miteinander verbunden sind. Die Leiterplatine 4 besitzt zwei erste Durchgangsöffnungen 5. Der Steckverbinder 2 besitzt vier Befestigungselemente 7, die in der vorliegenden Ausführungsform als Rasthaken ausgebildet sind. Mithilfe der Befestigungselemente 7 ist der Steckverbinder 2 lösbar mit der Leiterplatine 4 verbunden. Zwei der Befestigungselemente 7 sind innerhalb der ersten Durchgangsöffnungen 5 angeordnet und mit der Leiterplatine 4 verrastet. Die beiden übrigen Befestigungselemente 7 sind an einer Außenkante 23 der Leiterplatine 4 angeordnet und an der Außenkante 23 verrastet. An dem Steckverbinder 2 ist des Weiteren eine Verriegelungseinheit 11 angeordnet. Die Verriegelungseinheit 11 ist senkrecht zur Leiterplatine 4 zwischen einer Endrastposition und einer Vorrastposition bewegbar. In der gezeigten Ansicht befindet sich das Verriegelungselement 11 in einer Endrastposition. Das Verriegelungselement 11 ist in beiden ersten Durchgangsöffnungen 5 angeordnet, so dass ein Lösen der Befestigungselemente 7, die ebenfalls in den ersten Durchgangsöffnungen 5 angeordnet sind blockiert ist. Das Verriegelungselement 11 besitzt zwei Bohrungen 24 in denen jeweils ein Führungsbolzen 25 des Steckverbinders 2 angeordnet ist. Auf diese Weise wird die Bewegung des Verriegelungselements 11 geführt.

Der Gegensteckverbinder 26 kann in einer Steckrichtung x mit einer Steckseite 31, die dem Steckverbinder 2 zugewandt ist, in eine Steckkammer des Steckverbinders 2 eingebracht werden. Der Gegensteckverbinder 26 besitzt weiterhin eine Kodierung 36 in Form verschiedener Stege und Vertiefungen, um sicherzustellen, dass der Gegensteckverbinder 26 nur in einen dafür vorgesehenen Steckverbinder 2 einbringbar ist. Um sicherzustellen, dass der Gegensteckverbinder 26 mit dem Steckverbinder 2 in Verbindung bleibt, besitzt der Gegensteckverbinder 26 einen Primärrasthaken 35 der in einen Bügel 36 am Steckverbinder 2 einschnappt, so dass der Primärrasthaken 35 mit dem Bügel 36 formschlüssig und lösbar verbindbar ist.

Figur 2 zeigt eine Schnittdarstellung der erfindungsgemäßen Steckverbinderanordnung 1 gemäß der ersten Ausführungsform. Die Schnittebene verläuft dabei parallel zur Steckrichtung x durch einen der Lichtwellenleiter 3. Der Steckverbinder 2 besitzt einen ersten Aufnahmeraum 8 und einen zweiten Aufnahmeraum 9, die beide an die Steckkammer 27, in der der Gegensteckverbinder 26 angeordnet ist, angrenzen. Der erste Aufnahmeraum 8 wird durch eine erste Trennwand 29 von der Steckkammer 27 abgetrennt. Der zweite Aufnahmeraum 9 wird durch eine zweite Trennwand 30 von der Steckkammer 27 abgetrennt. Die erste Trennwand 29 ist in Steckrichtung x zur zweiten Trennwand 30 versetzt angeordnet, so dass innerhalb der Steckkammer 27 eine Stufe 37 ausgebildet wird. Der Gegensteckverbinder 26 besitzt an seiner Steckseite 31 eine erste Teilfläche 32 und eine zweiten Teilfläche 33, wobei die erste Teilfläche 32 ebenfalls zur zweiten Teilfläche 33 in Steckrichtung x versetzt ist. Die erste Teilfläche 32 liegt somit an der ersten Trennwand 29 und die zweite Teilfläche 33 an der zweiten Trennwand 30 an. Der erste Aufnahmeraum 8 ist zum zweiten Aufnahmeraum 9 geöffnet. Im ersten Aufnahmeraum 8 ist eine Linseneinheit 10 angeordnet. Die Linseneinheit 10 wird über das Verriegelungselement 11 im ersten Aufnahmeraum 8 befestigt. Im zweiten Aufnahmeraum 9 ist eine Sende/Empfangseinheit 6 zum Senden und Empfangen von Lichtsignalen angeordnet. Die Sende/Empfangseinheit 6 ist mit der Leiterplatine 4 elektrisch leitend verbunden. Die Linseneinheit 10 verbindet die Lichtwellenleiter 3 lichtleitend mit der Sende/Empfangseinheit 6. Die erste Trennwand 29 besitzt daher Verbindungsöffnungen 29 durch die die Linseneinheit 10 in die Steckkammer 27 hineinragt. Die Linseneinheit 10 ist über eine erste Kopplungsfläche 12 mit einer Stirnseite 14 des Lichtwellenleiters 3 lichtübertragend verbunden. Weiterhin besitzt die Linseneinheit 10 eine zweite Kopplungsfläche 13, die lichtleitend und lichtübertragend mit einer Kommunikationsseite 15 der Sende/Empfangsseite 6 verbunden ist. Die Kommunikationsseite 15 weist eine Vertiefung auf, in der eine komplementär zu der Vertiefung ausgeformte Wölbung der zweiten Kopplungsfläche 13 angeordnet ist, um die Positionierung der Linseneinheit 10 auf der Sende/Empfangseinheit 6 zu vereinfachen. Da die Kommunikationsseite 15 senkrecht zur Stirnseite 14 und folglich auch die erste Kopplungsfläche 12 senkrecht zur zweiten Kopplungsfläche 13 angeordnet ist, besitzt die Linseneinheit 10 darüber hinaus eine Reflexionsfläche 16. Mithilfe der Reflexionsfläche 16 wird Licht, welches über die jeweilige Kopplungsfläche 12; 13 in die Linseneinheit 10 eingekoppelt wird, zu jeweils anderen Kopplungsfläche 13; 12 reflektiert.

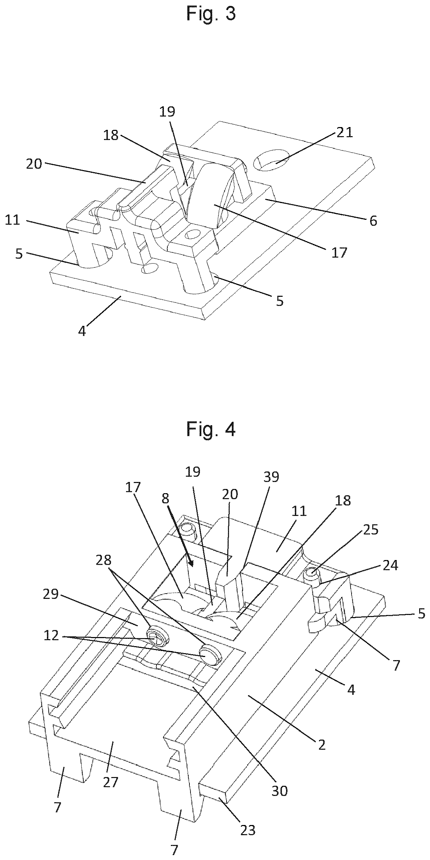

Figur 3 zeigt eine dreidimensionale Ansicht der Leiterplatine 4 mit Sende/Empfangseinheit 6, Linseneinheit 10 und Verriegelungselement 11 nach der ersten Ausführungsform. Zur besseren Übersicht ist der Steckverbinder ausgeblendet. Die Leiterplatine 4 besitzt neben den beiden ersten Durchgangsöffnungen 5 eine zweite Durchgangsöffnung 21. Die Durchgangsöffnungen 5; 21 sind dabei derart zueinander angeordnet, dass diese die Eckpunkte eines gleichschenkligen Dreiecks ausbilden, wobei die zweite Durchgangsöffnung 21 zu beiden ersten Durchgangsöffnungen 5 den gleichen Abstand aufweist. Die Linseneinheit 10 umfasst ein erstes Linsenelement 17 und ein zweites Linsenelement 18. Jedes Linsenelement 17; 18 besitzt jeweils eine erste und eine zweite Kopplungsfläche, so dass mithilfe der Linseneinheit 10 zwei Lichtwellenleiter mit der Sende/Empfangseinheit 6 verbunden werden können. Das erste Linsenelement 17 ist über einen Verbindungsabschnitt 19 mit dem zweiten Linsenelement 18 verbunden. Der Verbindungsabschnitt 19 ist materialeinheitlich und einstückig mit dem ersten und zweiten Linsenelement 17; 18 ausgebildet. Das Verriegelungselement 11 umfasst einen Befestigungssteg 20, der zwischen den Linsenelementen 17; 18 an dem Verbindungsabschnitt 19 angeordnet ist und somit die Linseneinheit 10 im ersten Aufnahmeraum der Steckkammer befestigt und positioniert hält. Der Verbindungsabschnitt 19 ist in der vorliegenden Ausführungsform ebenfalls teilweise stegförmig ausgebildet, um eine Anordnung des Befestigungssteges 20 am Verbindungsabschnitt 19 zu vereinfachen.

Figur 4 zeigt eine dreidimensionale Ansicht eines Steckverbinders 2 für die erfindungsgemäße Steckverbinderanordnung gemäß der ersten Ausführungsform, wobei eine Schnittebene parallel zur Leiterplatine 4 eingefügt ist, um Einblick in den ersten Aufnahmeraum 8 zu ermöglichen. Der Steckverbinder 2 besitzt an seiner Rückwand eine Seitenöffnung 39, durch die der Befestigungssteg 20 des Verriegelungselements 11 in den ersten Aufnahmeraum 8 hineinragt. Das Verriegelungselement 11 drückt über den Befestigungssteg 20 die Linseneinheit gegen die erste Trennwand 29. Da die Linseneinheit 10 in den Verbindungsöffnungen 29 angeordnet ist, wird die Linseneinheit 10 dadurch in ihrer Position im ersten Aufnahmeraum 8 fixiert.

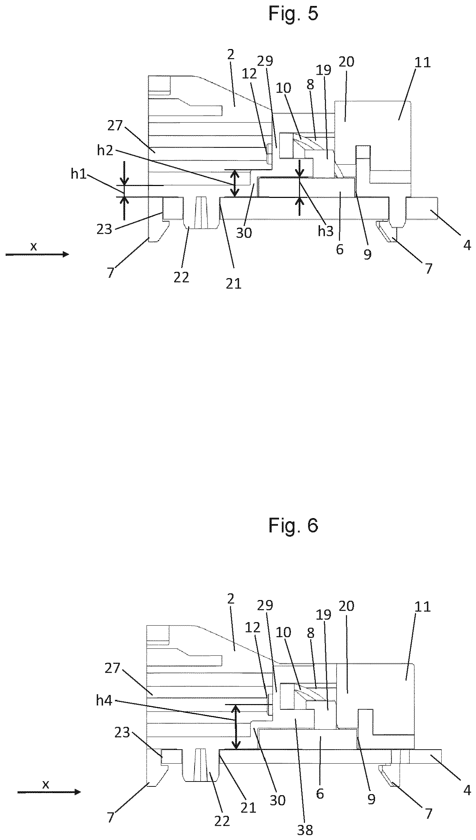

Figuren 5 und 6 zeigen weitere Schnittansichten des Steckverbinders 2 gemäß der ersten Ausführungsform, wobei die Schnittebene senkrecht zur Leiterplatine 4 und parallel zur Steckrichtung x verläuft. Weiterhin verläuft die Schnittebene mittig zwischen dem ersten und zweiten Linsenelement. Das Verriegelungselement 11 befindet sich in Figur 5 in der Vorraststellung und in Figur 6 in einer Endraststellung angeordnet. In der Vorraststellung ist das Verriegelungselement 11 außerhalb der ersten Durchgangsöffnungen 5 angeordnet, so dass die Rasthaken 7 des Steckverbinders 2 auf einfache Weise von der Leiterplatine 4 gelöst werden können. Der Befestigungssteg 20 ist in seiner Höhe derart gewählt, dass der Befestigungssteg 20 sowohl in der Vorraststellung als auch in der Endraststellung am Verbindungsabschnitt 19 angeordnet ist und die Linseneinheit 10 im ersten Aufnahmeraum 8 befestigt. Zwischen erstem und zweitem Aufnahmeraum 8; 9 ist weiterhin ein Auflageboden 38 angeordnet, der sich parallel zur Leiterplatine 4 erstreckt. Die Linseneinheit 10 liegt teilweise auf dem Auflageboden 38 auf. Weiterhin erstreckt sich der Auflageboden 38 zwischen dem ersten und zweiten Linsenelement. Der Steckverbinder 2 besitzt weiterhin einen Positionierdom 22, der innerhalb der zweiten Durchgangsöffnung 21 angeordnet ist. Der Positionierdom 22 ist einstückig mit dem Steckverbinder 2 ausgebildet und dient der schnellen und sicheren Positionierung des Steckverbinders 2 an der Leiterplatine 4. Weiterhin kann der Positionierdom 22 im verbauten Zustand Kräfte aufnehmen, die im Wesentlichen quer zur Steckrichtung x auf den Steckverbinder 2 einwirken, so dass ein ungewolltes Lösen des Steckverbinders 2 vermieden wird.

Um eine besonders kompakte Bauweise der Steckverbinderanordnung bei besonders verlustarmer Lichtübertragung sicherzustellen, ist eine Höhe h1, die eine an die Leiterplatine 4 anliegende Wand des Steckverbinders 2 im Bereich der Steckkammer 27 aufweist, derart gewählt, dass die Höhe h1 mit einer Höhe der Stufe h2 ein erstes Verhältnis ausbildet, das gleich dem Kehrwert eines zweiten Verhältnisses aus der Länge 11 der Sende/Empfangseinheit 6 und der Länge l2 der Reflexionsfläche ist (siehe Fig. 2). Darüber hinaus ist ein drittes Verhältnis aus der Höhe h3 der Sende/Empfangseinheit 6 und dem Abstand h4 eines Mittelpunktes der ersten Kopplungsfläche 12 gleich dem Kehrwert eines vierten Verhältnisses. Das vierte Verhältnis bildet sich aus einem Abstand l3, den ein Mittelpunkt der Kommunikationsseite 15 zu einer Wandung der Sende/Empfangseinheit 6 hat, die an der zweiten Trennwand 30 anliegt und dem Abstand l4, den die erste Teilfläche 32 zur zweiten Teilfläche 33 aufweist (siehe Fig. 2).

Die mit Bezug auf die Figuren gemachten Erläuterungen sind rein beispielhaft und nicht beschränkend zu verstehen.

### BEZUGSZEICHENLISTE

- 1: Steckverbinderanordnung
- 2: Steckverbinder
- 3: Lichtwellenleiter
- 4: Leiterplatine
- 5: Erste Durchgangsöffnung
- 6: Sende/Empfangseinheit
- 7: Befestigungselemente
- 8: Erster Aufnahmeraum
- 9: Zweiter Aufnahmeraum
- 10: Linseneinheit
- 11: Verriegelungselement
- 12: Erste Kopplungsfläche
- 13: Zweite Kopplungsfläche
- 14: Stirnseite
- 15: Kommunikationsseite
- 16: Reflexionsfläche
- 17: Erstes Linsenelement
- 18: Zweites Linsenelement
- 19: Verbindungsabschnitt
- 20: Befestigungssteg
- 21: Zweite Durchgangsöffnung
- 22: Positionierdom
- 23: Außenkante
- 24: Bohrung
- 25: Führungsbolzen
- 26: Gegensteckverbinder
- 27: Steckkammer
- 28: Verbindungsöffnung
- 29: Erste Trennwand
- 30: Zweite Trennwand
- 31: Steckseite
- 32: Erste Teilfläche
- 33: Zweite Teilfläche
- 34: Kodierung
- 35: Primärrasthaken
- 36: Bügel
- 37: Stufe
- 38: Auflageboden
- 39: Seitenöffnung

## Patentansprüche

1. Steckverbinderanordnung (1) mit einem Steckverbinder (2), einem Lichtwellenleiter (3) und einer Leiterplatine (4), wobei
die Leiterplatine (4) zumindest eine erste Durchgangsöffnung (5) und eine Sende/Empfangseinheit (6) zum Senden und/oder Empfangen von Lichtsignalen aufweist,
der Steckverbinder (2) formschlüssig und lösbar mit der Leiterplatine (4) verbunden ist, mithilfe zumindest eines Befestigungselements (7), das durch die erste Durchgangsöffnung (5) geführt und mit der Leiterplatine (4) verbunden ist,
der Steckverbinder (2) einen ersten Aufnahmeraum (8) aufweist, der zumindest teilweise an die Sende/Empfangseinheit (6) angrenzt,
eine Linseneinheit (10) in dem ersten Aufnahmeraum (8) angeordnet ist und die Sende/Empfangseinheit (6) lichtleitend mit dem Lichtwellenleiter (3) verbindet,
ein Verriegelungselement (11) bewegbar am Steckverbinder (2) angeordnet ist,
das Verriegelungselement (11) zumindest teilweise innerhalb des ersten Aufnahmeraums (8) angeordnet ist und die Linseneinheit (10) im ersten Aufnahmeraum (8) befestigt und
das Verriegelungselement (11) in eine Endrastposition bewegbar ist, in der das Verriegelungselement (11) zumindest teilweise in die erste Durchgangsöffnung (5) hineinragt und ein Lösen des Befestigungselements (7) von der Leiterplatine (4) blockiert.

2. Steckverbinderanordnung (1) nach dem vorhergehenden Anspruch, wobei die Linseneinheit (10) eine erste Kopplungsfläche (12), die mit einer Stirnseite (14) des Lichtwellenleiters (3) und eine zweite Kopplungsfläche (13), die mit einer Kommunikationsseite (15) der Sende/Empfangseinheit (6) lichtleitend gekoppelt ist, aufweist, wobei die erste Kopplungsfläche (12) senkrecht zur zweiten Kopplungsfläche (13) angeordnet ist.

3. Steckverbinderanordnung (1) nach dem vorhergehenden Anspruch, wobei die erste Kopplungsfläche (12) zumindest abschnittsweise eine zur Stirnseite (14) komplementäre Form und/oder die zweite Kopplungsfläche (13) zumindest abschnittsweise eine zur Kommunikationsseite (15) komplementäre Form aufweisen.

4. Steckverbinderanordnung (1) nach einem der Ansprüche 2 oder 3, wobei die Linseneinheit (10) ein erstes und ein zweites Linsenelement (17; 18) mit jeweils einer ersten und zweiten Kopplungsfläche (12, 13) aufweist, so dass zwei Lichtwellenleiter (3) mit der Kommunikationsseite (15) lichtleitend gekoppelt sind, wobei das erste und das zweite Linsenelement (17; 18) mithilfe eines Verbindungsabschnittes (19) miteinander verbunden sind.

5. Steckverbinderanordnung (1) nach dem vorhergehenden Anspruch, wobei das Verriegelungselement (11) einen Befestigungssteg (20) aufweist, der im ersten Aufnahmeraum (8) und an den Verbindungsabschnitt (19) anliegend angeordnet ist.

6. Steckverbinderanordnung (1) nach einem der vorhergehenden Ansprüche, wobei die Leiterplatine (4) zumindest eine zweite Durchgangsöffnung (21) aufweist, in der ein Positionierdom (22) des Steckverbinders (2) angeordnet ist.

7. Steckverbinderanordnung (1) nach dem vorhergehenden Anspruch, wobei die Leiterplatine (4) zwei erste Durchgangsöffnungen (5) und eine zweite Durchgangsöffnung (21) aufweist, die zweite Durchgangsöffnung (21) zu beiden ersten Durchgangsöffnungen (5) einen gleichen Abstand aufweist und die zwei ersten Durchgangsöffnungen (5) mit der zweiten Durchgangsöffnung (21) die Eckpunkte eines gleichschenkligen Dreiecks ausbilden.

8. Steckverbinderanordnung (1) nach dem vorhergehenden Anspruch, wobei die Sende/Empfangseinheit (6) innerhalb des gleichschenkligen Dreiecks angeordnet ist.

9. Steckverbinderanordnung (1) nach einem der vorhergehenden Ansprüche, wobei der Steckverbinder (2) in einem Randbereich der Leiterplatine (4) angeordnet ist und zumindest ein weiteres Befestigungselement (7) aufweist, das insbesondere mit einer Außenkante (23) der Leiterplatine (4) verbunden ist.

10. Steckverbinderanordnung (1) nach einem der vorhergehenden Ansprüche, wobei das Verriegelungselement (11) senkrecht zu der Leiterplatine (4) in eine Vorraststellung bewegbar ist, in der das Verriegelungselement (11) außerhalb der ersten Durchgangsöffnung (5) angeordnet ist.

11. Steckverbinderanordnung (1) nach einem der vorhergehenden Ansprüche, wobei das Verriegelungselement (11) zumindest eine Bohrung (24) aufweist, durch die ein am Steckverbinder (2) angeordneter Führungsbolzen (25) verläuft.

12. Steckverbinderanordnung (1) nach einem der vorhergehenden Ansprüche, wobei der Lichtwellenleiter (3) einen Gegensteckverbinder (26) aufweist, der lösbar mit dem Steckverbinder (2) verbunden und zumindest teilweise innerhalb einer Steckkammer (27) des Steckverbinders (2) angeordnet ist.

13. Steckverbinderanordnung (1) nach dem vorhergehenden Anspruch, wobei die Steckkammer (27) über zumindest eine Verbindungsöffnung (28) mit dem ersten Aufnahmeraum (8) verbunden und die Linseneinheit (10) teilweise in der Verbindungsöffnung (28) angeordnet ist.

14. Steckverbinderanordnung (1) nach einem der vorhergehenden Ansprüche, wobei der Steckverbinder (2) einen an den ersten Aufnahmeraum (8) angrenzenden zweiten Aufnahmeraum (9) aufweist, in dem die Sende/Empfangseinheit (6) angeordnet ist.

15. Steckverbinderanordnung (1) nach dem vorhergehenden Anspruch, wobei der erste Aufnahmeraum (8) eine erste Trennwand (29) und der zweite Aufnahmeraum (9) eine zweite Trennwand (30) aufweist, die erste und die zweite Trennwand (29; 30) die beiden Aufnahmeräume (8; 9) von der Steckkammer (27) abtrennen und die erste Trennwand (29) zur zweiten Trennwand (30) in einer Steckrichtung (x) versetzt angeordnet ist, so dass in der Steckkammer (27) eine Stufe (37) ausgebildet ist.

16. Steckverbinderanordnung (1) gemäß dem vorhergehenden Anspruch, wobei aus einer Höhe (h1) einer an die Leiterplatine (4) anliegenden Wand (38) des Steckverbinders (2) im Bereich der Steckkammer (27) und einer Höhe (h2) der Stufe (37) ein erstes Verhältnis ausgebildet wird,
ein zweites Verhältnis aus einer Länge (11) der Sende/Empfangseinheit (6) und einer Länge (l2) einer Reflexionsfläche (16), die Licht, das von dem Lichtwellenleiter (3) und/oder der Sende/Empfangseinheit (6) in die Linseneinheit (10) eingekoppelt wird in Richtung Sende/Empfangseinheit (6) oder Lichtwellenleiter (3) reflektiert, ausgebildet wird und das erste Verhältnis gleich dem Kehrwert des zweiten Verhältnisses ist.

17. Steckverbinderanordnung (1) nach Anspruch 15 oder 16, jeweils auf den Anspruch 12 rückbezogen, und wobei der Gegensteckverbinder (26) an einer Steckseite (31) eine erste Teilfläche (32), die an der ersten Trennwand (29) anliegt und eine zweite Teilfläche (33), die an der zweiten Trennwand (30) anliegt, aufweist.

## Claims

1. Plug-in connector arrangement (1) comprising a plug-in connector (2), an optical waveguide (3) and a printed circuit board (4),
wherein the printed circuit board (4) has at least one first passage opening (5) and a transceiver unit (6) for transmitting and/or receiving optical signals,
the plug-in connector (2) is connected in a positively locking and releasable manner to the printed circuit board (4) by means of at least one fastening element (7) which is guided through the first passage opening (5) and is connected to the printed circuit board (4),
the plug-in connector (2) has a first receiving space (8) which at least partially adjoins the transceiver unit (6),
a lens unit (10) is arranged in the first receiving space (8) and connects the transceiver unit (6) in a light-guiding manner to the optical waveguide (3),
a locking element (11) is movably arranged on the plug-in connector (2),
the locking element (11) is at least partially arranged within the first receiving space (8) and fastens the lens unit (10) in the first receiving space (8), and
the locking element (11) can be moved to a final latching position in which the locking element (11) at least partially projects into the first passage opening (5) and blocks the fastening element (7) from being released from the printed circuit board (4).

2. Plug-in connector arrangement (1) according to the preceding claim, wherein the lens unit (10) has a first coupling face (12), which is coupled in a light-guiding manner to an end side (14) of the optical waveguide (3), and a second coupling face (13), which is coupled in a light-guiding manner to a communications side (15) of the transceiver unit (6), wherein the first coupling face (12) is arranged perpendicularly to the second coupling face (13).

3. Plug-in connector arrangement (1) according to the preceding claim, wherein the first coupling face (12), at least in portions, has a shape that complements the end side (14) and/or the second coupling face (13), at least in portions, has a shape that complements the communications side (15).

4. Plug-in connector arrangement (1) according to either of Claims 2 and 3, wherein the lens unit (10) has a first and a second lens element (17; 18), each with a first and a second coupling face (12, 13), so that two optical waveguides (3) are coupled in a light-guiding manner to the communications side (15), wherein the first and the second lens element (17; 18) are connected to one another by means of a connecting portion (19).

5. Plug-in connector arrangement (1) according to the preceding claim, wherein the locking element (11) has a fastening web (20) which is arranged in the receiving space (8) and in a manner bearing against the connecting portion (19).

6. Plug-in connector arrangement (1) according to one of the preceding claims, wherein the printed circuit board (4) has at least one second passage opening (21) in which a positioning dome (22) of the plug-in connector (2) is arranged.

7. Plug-in connector arrangement (1) according to the preceding claim, wherein the printed circuit board (4) has two first passage openings (5) and a second passage opening (21), the second passage opening (21) is at the same distance from the two first passage openings (5) and the two first passage openings (5) form the corners of an equilateral triangle with the second passage opening (21) .

8. Plug-in connector arrangement (1) according to the preceding claim, wherein the transceiver unit (6) is arranged within the equilateral triangle.

9. Plug-in connector arrangement (1) according to one of the preceding claims, wherein the plug-in connector (2) is arranged in a border region of the printed circuit board (4) and has at least one further fastening element (7) which is connected, in particular, to an outer edge (23) of the printed circuit board (4).

10. Plug-in connector arrangement (1) according to one of the preceding claims, wherein the locking element (11) can be moved perpendicularly to the printed circuit board (4) to a pre-latching position in which the locking element (11) is arranged outside the first passage opening (5).

11. Plug-in connector arrangement (1) according to one of the preceding claims, wherein the locking element (11) has at least one bore (24) through which a guide pin (25) arranged on the plug-in connector (2) runs.

12. Plug-in connector arrangement (1) according to one of the preceding claims, wherein the optical waveguide (3) has a mating plug-in connector (26) which is releasably connected to the plug-in connector (2) and is at least partially arranged within a plug-in chamber (27) of the plug-in connector (2).

13. Plug-in connector arrangement (1) according to the preceding claim, wherein the plug-in chamber (27) is connected to the first receiving space (8) via at least one connecting opening (28) and the lens unit (10) is partially arranged in the connecting opening (28).

14. Plug-in connector arrangement (1) according to one of the preceding claims, wherein the plug-in connector (2) has a second receiving space (9) adjoining the first receiving space (8), the transceiver unit (6) being arranged in the second receiving space.

15. Plug-in connector arrangement (1) according to the preceding claim, wherein the first receiving space (8) has a first separating wall (29) and the second receiving space (9) has a second separating wall (30), the first and the second separating wall (29; 30) separate off the two receiving spaces (8; 9) from the plug-in chamber (27) and the first separating wall (29) is offset in relation to the second separating wall (30) in a plug-in direction (x), so that a step (37) is formed in the plug-in chamber (27) .

16. Plug-in connector arrangement (1) according to the preceding claim, wherein a first ratio of a height (h1) of a wall (38), bearing against the printed circuit board (4), of the plug-in connector (2) in the region of the plug-in chamber (27) and a height (h2) of the step (37) is formed,
a second ratio of a length (11) of the transceiver unit (6) and a length (12) of a reflection face (16), which reflects light which is coupled into the lens unit (10) from the optical waveguide (3) and/or the transceiver unit (6) in the direction of the transceiver unit (6) or the optical waveguide (3), is formed and the first ratio is equal to the inverse of the second ratio.

17. Plug-in connector arrangement (1) according to Claim 15 or 16, each referring back to Claim 12, and wherein the mating plug-in connector (26), on a plug-in side (31), has a first partial face (32), which bears against the first separating wall (29), and a second partial face (33), which bears against the second separating wall (30) .

## Revendications

1. Ensemble à connecteur enfichable (1) comprenant un connecteur enfichable (2), une fibre optique (3) et une carte de circuit imprimé (4),
la carte de circuit imprimé (4) comportant au moins une première ouverture de passage (5) et une unité d'émission/réception (6) destinée à émettre et/ou recevoir des signaux lumineux,
le connecteur enfichable (2) étant relié par complémentarité de formes et de manière amovible à la carte de circuit imprimé (4) à l'aide d'au moins un élément de fixation (7) qui est guidé à travers la première ouverture de passage (5) et qui est relié à la carte de circuit imprimé (4),
le connecteur enfichable (2) comportant un premier espace de réception (8) qui est contigu au moins partiellement à l'unité d'émission/réception (6),
une unité formant lentille (10) étant disposée dans le premier espace de réception (8) et reliant optiquement l'unité d'émission/réception (6) à la fibre optique (3),
un élément de verrouillage (11) étant disposé de manière mobile au niveau du connecteur enfichable (2),
l'élément de verrouillage (11) étant disposé au moins partiellement à l'intérieur du premier espace de réception (8) et l'unité formant lentille (10) étant fixée dans le premier espace de réception (8) et
l'élément de verrouillage (11) pouvant être déplacé jusque dans une position d'encliquetage finale dans laquelle l'élément de verrouillage (11) fait saillie au moins partiellement dans la première ouverture de passage (5) et empêche l'élément de fixation (7) de se détacher de la carte de circuit imprimé (4).

2. Ensemble à connecteur enfichable (1) selon la revendication précédente, l'unité formant lentille (10) comportant une première surface de couplage (12) qui est couplée optiquement à un côté frontal (14) de la fibre optique (3) et une deuxième surface de couplage (13) qui est couplée optiquement à un côté communication (15) de l'unité d'émission/réception (6), la première surface de couplage (12) étant disposée perpendiculairement à la deuxième surface de couplage (13) .

3. Ensemble à connecteur enfichable (1) selon la revendication précédente, la première surface de couplage (12) ayant au moins par portions une forme complémentaire du côté frontal (14) et/ou la deuxième surface de couplage (13) ayant au moins par portions une forme complémentaire du côté communication (15).

4. Ensemble à connecteur enfichable (1) selon l'une des revendications 2 ou 3, l'unité formant lentille (10) comportant un premier et un deuxième élément formant lentille (17 ; 18) qui comportent chacun une première et une deuxième surface de couplage (12, 13) de sorte que deux fibres optiques (3) sont couplées optiquement au côté communication (15), les premier et deuxième éléments formant lentilles (17 ; 18) étant reliés l'un à l'autre à l'aide d'une portion de liaison (19) .

5. Ensemble à connecteur enfichable (1) selon la revendication précédente, l'élément de verrouillage (11) comportant une nervure de fixation (20) qui est disposée dans le premier espace de réception (8) et de manière adjacente à la portion de liaison (19).

6. Ensemble à connecteur enfichable (1) selon l'une des revendications précédentes, la carte de circuit imprimé (4) comportant au moins une deuxième ouverture de passage (21) dans laquelle est disposé un ergot de positionnement (22) du connecteur enfichable (2).

7. Ensemble à connecteur enfichable (1) selon la revendication précédente, la carte de circuit imprimé (4) comportant deux premières ouvertures de passage (5) et une deuxième ouverture de passage (21), la deuxième ouverture de passage (21) étant à la même distance des deux premières ouvertures de passage (5) et les deux premières ouvertures de passage (5) formant avec la deuxième ouverture de passage (21) les sommets d'un triangle équilatéral.

8. Ensemble formant connecteur enfichable (1) selon la revendication précédente, l'unité d'émission/réception (6) étant disposée à l'intérieur du triangle équilatéral.

9. Ensemble de connecteur enfichable (1) selon l'une des revendications précédentes, le connecteur enfichable (2) étant disposé dans une zone de bord de la carte de circuit imprimé (4) et comportant au moins un autre élément de fixation (7) qui est relié en particulier à un bord extérieur (23) de la carte de circuit imprimé (4).

10. Ensemble à connecteur enfichable (1) selon l'une des revendications précédentes, l'élément de verrouillage (11) pouvant être déplacé perpendiculairement à la carte de circuit imprimé (4) dans une position de pré-encliquetage dans laquelle l'élément de verrouillage (11) est disposé à l'extérieur de la première ouverture de passage (5).

11. Ensemble à connecteur enfichable (1) selon l'une des revendications précédentes, l'élément de verrouillage (11) comportant au moins un alésage (24) à travers lequel passe une broche de guidage (25) disposée au niveau du connecteur enfichable (2).

12. Ensemble à connecteur enfichable (1) selon l'une des revendications précédentes, la fibre optique (3) comportant un connecteur enfichable homologue (26) qui est relié de manière amovible au connecteur enfichable (2) et qui est disposé au moins partiellement dans une chambre d'enfichage (27) du connecteur enfichable (2).

13. Ensemble à connecteur enfichable (1) selon la revendication précédente, la chambre d'enfichage (27) étant reliée au premier espace de réception (8) par le biais d'au moins une ouverture de liaison (28) et l'unité formant lentille (10) étant partiellement disposée dans l'ouverture de liaison (28).

14. Ensemble à connecteur enfichable (1) selon l'une des revendications précédentes, le connecteur enfichable (2) comportant un deuxième espace de réception (9) qui est contigu au premier espace de réception (8) et dans lequel l'unité d'émission/réception (6) est disposée.

15. Ensemble à connecteur enfichable (1) selon la revendication précédente, le premier espace de réception (8) comportant une première paroi de séparation (29) et le deuxième espace de réception (9) comportant une deuxième paroi de séparation (30), les première et deuxième parois de séparation (29 ; 30) séparant les deux espaces de réception (8 ; 9) de la chambre d'enfichage (27) et la première paroi de séparation (29) étant disposée de manière décalée par rapport à la deuxième paroi de séparation (30) dans une direction d'enfichage (x) de façon à former un gradin (37) dans la chambre d'enfichage (27).

16. Ensemble à connecteur enfichable (1) selon la revendication précédente,
un premier rapport étant formé à partir d'une hauteur (h1) d'une paroi (38) du connecteur enfichable (2) en appui sur la carte de circuit imprimé (4) dans la zone de la chambre d'enfichage (27) et d'une hauteur (h2) du gradin (37),
un deuxième rapport étant formé à partir d'une longueur (11) de l'unité d'émission/réception (6) et d'une longueur (12) d'une surface de réflexion (16), qui réfléchit la lumière, qui est injectée par couplage par la fibre optique (3) et/ou l'unité d'émission/réception (6) dans l'unité formant lentille (10), en direction de l'unité d'émission/réception (6) ou de la fibre optique (3), et le premier rapport étant égal à l'inverse du deuxième rapport.

17. Ensemble à connecteur enfichable (1) selon la revendication 15 ou 16, à chaque fois par rapport à la revendication 12, et le connecteur enfichable homologue (26) comportant sur un côté d'enfichage (31) une première surface partielle (32), qui vient en appui sur la première paroi de séparation (29), et une deuxième surface partielle (33) qui vient en appui sur la deuxième paroi de séparation (30).
